Europäisches Patentamt

European Patent Office

Office européen des brevets

(11) Veröffentlichungsnummer: **0 254 192**

**A2**

# (12) EUROPÄISCHE PATENTANMELDUNG

(21) Anmeldenummer: 87110193.7

(22) Anmeldetag: 15.07.87

(51) Int. Cl.⁴ **B60R 1/00** , G05D 1/02 , B66F 9/06

(30) Priorität: 19.07.86 DE 3624486

(43) Veröffentlichungstag der Anmeldung:
27.01.88 Patentblatt 88/04

(84) Benannte Vertragsstaaten:
CH DE FR GB IT LI

(71) Anmelder: **Thomas Enkelmann Computer**
**Bremerhavener Heerstrasse 44**
**D-2820 Bremen 77(DE)**

(72) Erfinder: **Enkelmann, Thomas F.**
**Belmerstrasse 46**
**D-2800 Bremen 44(DE)**
Erfinder: **Weber, H.H.**
**Am Dammacker 12 a**
**D-2800 Bremen 1(DE)**

(74) Vertreter: **Meissner & Bolte Patentanwälte**
**Hollerallee 73**
**D-2800 Bremen 1(DE)**

(54) Verfahren und Vorrichtung zum Steuern von Fahrzeugen und/oder zur Verringerung der aktiven und passiven Gefährdung von Bedienungspersonen.

(57) Die Erfindung betrifft ein Verfahren zum Steuern und/oder zum Verringern der aktiven und passiven Gefährdung bei Fahrzeugen. Üblicherweise ist bei Fahrzeugen das Gesichtsfeld der Bedienungsperson in bestimmten Abschnitten eingeschränkt, so z.B. bei Gabelstaplern. Es wird vorgeschlagen, mindestens eine Bildaufnahme-Einrichtung derart am Fahrzeug oder am Fördergerät mitzuführen, daß mindestens der verdeckte Teil des Gesichtsfeldes von der Bildaufnahme-Einrichtung aufgenommen und im wesentlichen ohne Zeitverzögerung auf einem Bildwiedergabegerät, einem Monitor oder dgl., wiedergegeben wird, das innerhalb des Gesichtsfeldes der Bedienungsperson angebracht ist.

EP 0 254 192 A2

## Verfahren und Vorrichtung zum Steuern von Fahrzeugen und/oder zur Verringerung der aktiven und passiven Gefährdung von Bedienungspersonen

Die Erfindung betrifft ein Verfahren nach dem Oberbegriff des Anspruchs 1 sowie eine Vorrichtung zur Durchführung des Verfahrens nach dem Oberbegriff des Anspruchs 11.

Bei der Steuerung von Fahrzeugen, und zwar sowohl von Landals auch Luftfahrzeugen, wird oftmals ein sehr großer Aufwand getrieben, um Bedienungspersonen ein möglichst großes Gesichtsfeld zu verschaffen. Besonders problematisch ist dies bei Flurförderzeugen und Hebezeugen, bei denen das Gesichtsfeld vielfach durch die zu transportierende Last eingeengt wird. Deswegen sieht man bei spielsweise an Kranfahrzeugen zwei Fahrerhäuser vor, die je nach benötigtem Gesichtsfeld von der Bedienungsperson besetzt werden. Bei Gabelstaplern ordnet man dagegen den Führersitz möglichst hoch an, um der Bedienungsperson einen möglichst guten Überblick auch bei aufgenommener Last zu ermöglichen. All diese Maßnahmen führen zu hohen Kosten, wobei die letztgenannte Maßnahme am Gabelstapler noch den Nachteil hat, daß der Schwerpunkt ungünstig hoch liegt.

Darüber hinaus ist es gerade bei Flurförderzeugen, nämlich Gabelstaplern, bei denen man bemüht ist, zuverlässig hohe Transport- bzw. Umschlagleistungen zu bekommen, nachteilig, daß ständig wiederkehrende Bewegungsabläufe, beispielsweise das Einfahren mit der Gabelstaplergabel in eine Palette, auch bei geübten Bedienungspersonen erhebliches Geschick erfordert und Beschädigungen niemals ganz ausbleiben. Hier wäre es wünschenswert, solche Standardbewegungsabläufe durch automatische Steuerungen durchzuführen bzw. zu unterstützen.

Hiervon ausgehend, liegt der Erfindung die Aufgabe zugrunde, ein Fahrzeug der eingangs genannten Art dahingehend weiterzuentwickeln, daß einerseits das Gesichtsfeld der Bedienungsperson eines Fahrzeugs vergrößert und andererseits eine Steuerung des Fahrzeugs weitestgehend automatisiert durchgeführt wird.

Diese Aufgabe wird durch die kennzeichnenden Merkmale des Anspruchs 1 in Zusammenhang mit den Merkmalen aus dem Oberbegriff dieses Anspruchs gelöst. Durch die Erfassungs-Einrichtung ist es möglich, der Bedienungsperson einen Eindruck von einem für sie nicht erreichbaren Standpunkt an einer in bezug auf die Last günstigen Stelle zu verschaffen. Zu diesem Zweck ist die Erfassungs-Einrichtung zweckmäßigerweise als Bilderfassungs-Einrichtung ausgebildet. Darüber hinaus kann die Erfassungs-Einrichtung auch dazu dienen, Daten zu erfassen, die von (elektronischen) Steuereinrichtungen zur Steuerung des Fahrzeugs benötigt werden. Für diese Zwecke kommen sowohl Bilderfassungs-Einrichtungen als auch solche in "etracht, die mit optischen Mitteln oder Ultraschall arbeiten.

Zweckmäßigerweise werden zwei (Bild-)Erfassungs-Einrichtungen in einem definierten Abstand zueinander angeordnet, und zwar vorzugsweise auf einer gemeinsamen, horizontalen Linie liegend. Diese sind in Bewegungsrichtung nach vorn gerichtet, derart, daß sie Einblick in den verdeckten Teil des Gesichtsfeldes der Bedienungsperson des Fahrzeugs ermöglichen. Die Weiterverarbeitung der so aufgenommenen Signale kann unterschiedlich erfolgen. Zum einen können die Ausgangssignale der Erfassungs-Einrichtungen einem Computer zugeführt werden, der die aufgenommenen Signale, insbesondere Bilder, miteinander vergleicht und zur Dekkung bringt. Dieses "Zur-Deckung-Bringen" kann entweder dadurch geschehen, daß der Computer mindestens eine Erfassungs-Einrichtung, beispielsweise eine Kamera nachführt, oder dadurch, daß eine virtuelle Überdeckung stattfindet, indem der Computer die (Bild-)Informationen verschiebt. Aus dieser Verschiebung bzw. Nachführung läßt sich insbesondere die Entfernung des im Blickfeld der ErfassungsEinrichtung befindlichen Objekts zu der Erfassungs-Einrichtung und damit zum Fahrzeug errechnen. Das Ergebnis kann dann entweder der Bedienungsperson angezeigt worden oder alternativ oder gleichzeitig für selbsttätige Steuerungszwecke verwendet werden. Führt man z.B. die Bildaufnahme-Einrichtung (Kamera) an der von einem Kran gehobenen Last mit, so kann die Bedienungsperson die Entfernung der Last beispielsweise zum Boden exakt ablesen und gleichzeitig die Gestalt des Bodens auf einem cder mehreren Bildwiedergabe-Gerät(en) (Monitoren) feststellen.

Bei Verwendung von Bildaufnahme-Einrichtungen ist es zweckmäßig, diese mit vorzugsweise manuell zu betätigenden Umschaltern für verschiedene Bildausschnitte auszurüsten. Dies kann beispielsweise durch Umschaltung auf unterschiedliche Brennweiten oder Verwendung einer Vario-Optik (Zoom) geschehen. So können zum einen weit entfernte Objekte "herangeholt" werden, um diese für die Bedienungsperson besser erkennbar zu machen, und zum anderen für Abstandsmessungen auf eine vorgegebene (Bezugs-)Brennweite zurückgegriffen werden.

Nach einem weiteren Vorschlag der Erfindung dienen die Erfassungs-Einrichtungen zur wenigstens teilweise selbsttätigen Steuerung des Fahrzeugs, insbesondere bei der Aufnahme einer Last, beispielsweise genormter Paletten. In diesem Falle wird ein Gabelstapler oder dgl. selbsttätig derart gesteuert, daß die Zinken seiner Gabel etwa mittig zwischen die zur Aufnahme der Palette dienenden Ausnehmungen an derselben gefahren werden.

In ähnlicher Weise ist es möglich, das Fahrzeug beim Passieren enger Durchfahrten entsprechend zu steuern bzw. ein Signal zu erzeugen, wenn die Durchfahrt aufgrund ihrer zu geringen Abmessungen nicht mehr für das jeweilige Fahrzeug passierbar ist.

Weiterhin können in ähnlicher Weise auf dem Boden befindliche Gegenstände erfaßt und hinsichtlich der Überfahrbarkeit (Bodenfreiheit) überprüft werden oder das Fahrzeug selbsttätig um ein Hindernis herumgesteuert bzw. zwischen Hindernissen hindurch manövriert werden.

Ein weiteres, wesentliches Merkmal der Erfindung bezieht sich auf die vollautomatische Steuerung des Fahrzeugs in Abhängigkeit von einem in den Computer gespeicherten Plan, der den Gegebenheiten im Einsatzbereich des Fahrzeugs entspricht. Hierbei können die Erfassungs-Einrichtungen dazu dienen, die rechnerisch (durch Koppeln) ermittelte Position zu vergleichen, indem ein oder mehrere geeignete Objekte, die in den Computer eingespeichert sind, von den Erfassungs-Einrichtungen angepeilt und die daraus ermittelte Position mit der errechneten Position verglichen wird. Sollten Abweichungen zwischen der errechneten und der angepeilten Position vorhanden sein, wird die errechnete Position durch die angepeilte Position korrigiert. Eventuell vorhandene, sich mit der Zeit addierende Koppelfehler können so rechtzeitig ausgeglichen werden, bevor so große Abweichungen auftreten, die eine zuverlässige selbsttätige Steuerung des Fahrzeugs nicht mehr möglich machen.

Weiterhin wird bei Verwendung von Bildaufnahme-Einrichtungen vorgeschlagen, · der Bedienungsperson mehrere, vorzugsweise zwei, Bildwiedergabegeräte (Monitore) oder beide Bilder auf einem Bildwiedergabegerät (Monitor) zur Verfügung zu stellen, so daß -bei einigem Training - ein dreidimensionales Erkennen der gegenwärtigen Situation möglich ist.

Die vorrichtungsgemäßen Merkmale zur Lösung der Erfindung werden zusammen mit weiteren erfindungswesentlichen Maßnahmen in nachfolgenden Ausführungsbeispielen der Erfindung anhand der Zeichnungen näher erläutert. Es zeigen:

Fig. 1 einen herkömmlichen Gabelstapler,

Fig. 2 einen erfindungsgemäß ausgestalteten Gabelstapler,

Fig. 3 einen erfindungsgemäß ausgestalteten Gabelstapler für Rollstuhlfahrer,

Fig. 4 einen Kranwagen in der erfindungsgemäßen Ausgestaltung,

Fig. 5 eine Kameraanordnung mit Träger, und

Fig. 6 einen eine Last tragenden Ausleger mit daran angeordneten Kameras.

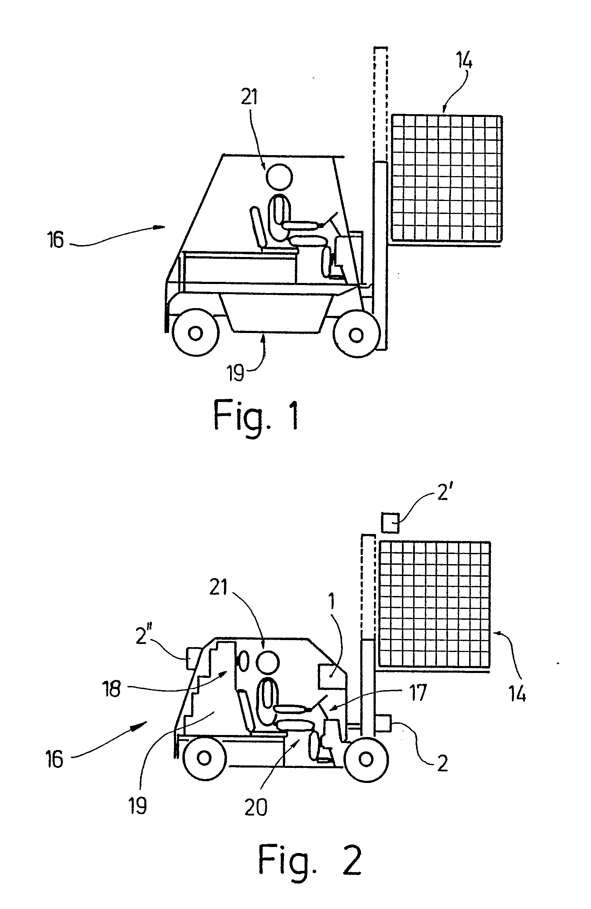

In Fig. 1 ist ein herkömmlicher Gabelstapler gezeigt. Bei derartigen Flurförderzeugen sitzt die Bedienungsperson 21 auf dem Antriebsaggregat 19, gegebenenfalls samt den dazugehörigen Batterien. Auf diese Weise wird gewährleistet, daß beim Absetzen der Last 14, bzw. dann, wenn diese weiter nach unten gefahren ist, die Bedienungsperson 21 über die Last 14 hinweg in Fahrtrichtung sehen kann. Nach hinten ist die Kabine des Fahrzeugs 16 ebenfalls mit Fenstern ausgestattet, so daß die Bedienungsperson 21 auch nach hinten ein freies Blickfeld hat. Hebt man aber die Last an, wie in Fig. 1 gezeigt, zum Beispiel um eine Palette mit aufgestapelten Gütern in ein Regal einzufahren, so ist in bestimmten Höhen die Sicht der Bedienungsperson 21 nach vorne wesentlich eingeschränkt oder sogar völlig unmöglich.

Bei der in Fig. 2 gezeigten Ausführungsform der Erfindung ist am Hubgestell des Fahrzeugs 16 bzw. des Gabelstaplers eine Kamera 2 unten und eine Kamera 2' oben angebracht. Weiterhin ist auf der Hinterseite des Fahrzeugs 16 eine dritte Kamera 2" angebracht. Im Innenraum des Fahrzeugs 16 ist ein Monitor 1 im Blickfeld der Bedienungsperson 21 vorgesehen, auf dem die von den Kameras 2 bis 2" aufgezeichneten Informationen erscheinen. Gegebenenfalls können auch mehrere Monitore 1 vorgesehen sind.

Der Sitzraum 20 für die Bedienungsperson 21 befindet sich im vorderen Teil des Fahrzeugs 16, während die Antriebsaggregate (gegebenenfalls mit Batterien), die mit der Bezugsziffer 19 bezeichnet sind, hinter der Bedienungsperson 21 angeordnet sind. Durch diese besondere Anordnung ist gewährleistet, daß zum einen die Gesamthöhe des Fahrzeugs 16 wesentlich niedriger ist, als dies bisher der Fall war (siehe Fig. 1), zum anderen die Bedienungsperson 21 durch die Antriebsaggregate 19 selbst geschützt ist. Weiterhin kann eine Nackenstütze 18 an den Antriebsaggregaten 19 bzw. an den darauf montierten Rückenlehnenteilen angebracht sein.

Dadurch, daß eine Kamera 2" an der Rückseite des Fahrzeugs 16 angebracht ist, spielt es keine Rolle, daß der Bedienungsperson 21 die Sicht nach hinten durch die Antriebsaggregate 19 versperrt ist. Die notwendige Bildinformation gelangt über den Monitor 1 zur Bedienungsperson.

Selbst dann, wenn die freie Sicht durch die Last 14 versperrt ist, gelangt die notwendige Bildinformation zumindest über eine der Kameras 2 oder 2" zur Bedienungsperson 21, die somit die Bewegung des Fahrzeugs 16 vollständig unter Kontrolle hat.

Vorzugsweise ist zusammen mit dem Bildempfangsgerät bzw. dem Monitor 1 ein Computer im Fahrzeug 16 installiert, der die Ausgangssignal der Kameras 2 bis 2″ verarbeitet. Die Verarbeitung geschieht hierbei insbesondere dahingehend, daß die aus zwei, in dieselbe Richtung blickenden Kameras stammenden Ausgangssignale miteinander derart verarbeitet werden, daß die Bildausschnitte zur Deckung gebracht werden (durch eine Verschiebung der gespeicherten Bilder), so daß mittels des Computers die Entfernung eines im Bildfeld befindlichen Objekts zum Fahrzeug 16 errechnet werden kann, und zwar vorzugsweise in einer weiter unten beschriebenen Weise. Diese Entfernung wird dann der Bedienungsperson 21 angezeigt. Darüber hinaus ist vorgesehen, eine Entfernungsschwelle derart festzulegen, daß bei Unterschreiten der Erfernungsschwelle zwischen wahrgenommenem Objekt und Fahrzeug 16 ein Warnsignal an die Bedienungsperson 21 gegeben wird, gegebenenfalls auch die Antriebsmittel 19 des Fahrzeugs 16 stillgelegt werden. Auf diese Weise ist eine weitere Erhöhung der Sicherheit gewährleistet.

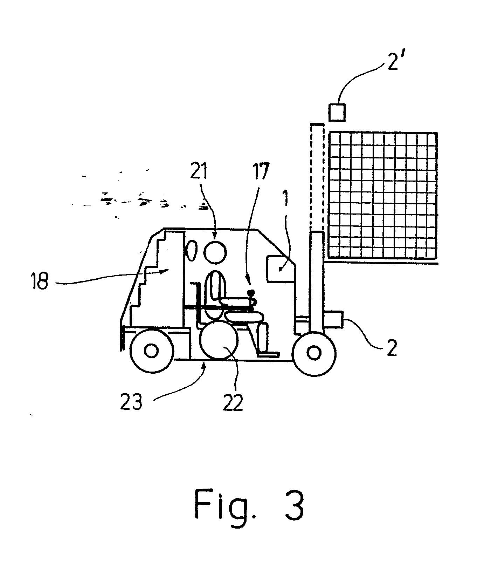

In Fig. 3 ist eine weitere bevorzugte Ausführungsform des in Fig. 2 gezeigten Fahrzeugs 16 dargestellt. Hierbei ist der Innenraum 20 derart gestaltet, daß die Bedienungsperson 21 auf einem Rollstuhl 22 sitzen kann. Zum Einsteigen ist weiterhin eine Hebebühne 23 vorgesehen, die bis zum Boden abgesenkt werden und im angehobenen Zustand als Fahrzeugboden dienen kann.

Zur oben beschriebenen Entfernungsmessung sowie für automatische Steuerungsaufgaben ist es zwekmäßig, dem in den Fig. 2 bzw. 3 gezeigten Fahrzeug 16, nämlich Gabelstapler, sowohl vorne als auch hinten jeweils eine weitere, nicht gezeigte Kamera zuzuordnen, die sich im Abstand zu den Kameras 2′ bzw. 2″ befindet, derart, daß diese auf einer gemeinsamen, horizontalen Linie liegen. Durch Ausrichten eines bestimmten (gleichen) Bildpunktes dieser beiden Kameras auf einen Fokuspunkt einer Vorderfläche des zur Abstandsbestimmung dienenden Objekts kann dann aufgrund der Winkel beider Kameras zur gemeinsamen Verbindungslinie, die gleich sein aber auch voneinander abweichen können, der Abstand errechnet werden, vorzugsweise durch den dem Fahrzeug 16 zugeordneten Computer. Der errechnete Abstand kann dann der Bedienungsperson 21 angezeigt oder auch alternativ bzw. zusätzlich im Computer weiterverarbeitet werden zur Positionsbestimmung desselben in seinem Aktionsbereich bei der automatischen Steuerung des Fahrzeugs 16. Im letztgenannten Fall läßt sich das Fahrzeug 16 zum selbsttätigen Abfahren bestimmter Strecken innerhalb seines Aktionsbereichs einsetzen. Dazu sind im Computer die räumlichen Gegebenheiten des Aktionsbereichs, beispielsweise Wände, Durchfahrten, Pfeiler und Lagergegenstände eines Lagerhauses, einzuprogrammieren. Die jeweilige Position des Fahrzeuges 16 wird (grob) durch Addition der Wegvektoren der zurückgelegten Strecke festgestellt. Überprüft bzw. korrigiert wird die sich daraus ergebende Position durch Abstandsbestimmung zu geeigneten Objekten, die im Computer einprogrammiert sind.

In ähnlicher Weise ist es durch die vorstehend erörterte Entfernungsmessung möglich, Durchfahrten bzw. Hindernisse auszumessen, um das Fahrzeug 16 durch dieselben hindurch bzw. um dieselben herum zu manövrieren. Auch kann die Entfernungsmessung dazu dienen, die Zinken der Gabel des Fahrzeugs 16 (Gabelstapler) in eine Palette mit der aufzunehmenden Last einzufädeln. Wenn in diesem Fall jede Palette mit einer Codierung, vorzugsweise einer üblichen Bar-Codierung versehen ist, kann bei Ausrüstung des Fahrzeugs 16 mit einer entsprechenden Leseeinrichtung optischer oder elektromagnetischer Art, die keine Kamera zu sein braucht, der aufzunehmende Gegenstand identifiziert werden. In diesem Falle ist es sogar möglich, das Fahrzeug 16 vollautomatisch nach einem vorgegebenen Programm bestimmte Transport-bzw. Umschlagaufgaben durchführen zu lassen, ohne daß eine Bedienungsperson 21 erforderlich wird. Diese kann dann entweder ganz entfallen oder zu Kontrollzwecken auf dem Fahrzeug 16 mitfahren.

Die unten am Fahrzeug 16 angeordnete Kamera 2 läßt sich zusätzlich oder alternativ zu den (oberen) Kameras 2′ bzw. 2″ zur Ermittlung bzw. Positionsbestimmung von Hindernissen auf der Fahrbahn einsetzen. Diese Kamera 2 kann darüber hinaus alleine oder in Verbindung mit einer der oberen Kameras 2′ zur Feststellung einer Neigung der Fahrbahn verwendet werden. Mit der so festgestellten Neigung kann automatisch Einfluß genommen werden auf die Neigung der Gabel des Fahrzeugs 16 zur Verhinderung eines Herunterrutschens der Last von derselben. So kann zum Beispiel durch eine geeignete Nachfolgesteuerung die Neigung des Hubgerüsts mit der daran befestigten Gabel an erfaßte Fahrbahnneigungen angepaßt werden, wodurch der Gefahr eines Herunterrutschens der Last von der Gabel beim Befahren der Neigung vorgebeugt wird. Dies ist besonders dann zweckmäßig, wenn der Transport gefährlicher oder empfindlicher Güter zu erfolgen hat.

Bei einer besonders vorteilhaften Weiterbildung des Fahrzeugs 16 wird vorgesehen, auch die quer zur Fahrtrichtung verlaufende Neigung desselben zu ermitteln. Dies geschieht derart, daß zumindest ein Reifenpaar (an der Vorder-oder Hinterachse) mit Belastungsmeßeinrichtungen (Kraftmeßdosen) versehen wird, von denen jedem Rad an einer identischen Stelle eine die gleichen Meß-und Übertragungseigenschaften aufweisende Kraftmeßdose oder dgl. zugeordnet ist. Aus der Differenzmessung der Belastungen der Reifen einer Achse - und auch beider Achsen - kann dann in Abhängigkeit vom Gesamtgewicht die Schräglage des Fahrzeugs gegenüber der Horizontalen errechnet werden, beispielsweise durch den bordeigenen Computer. Es kann so die Gefahr eines Umkippens angezeigt werden oder bei Vorhandensein der Kippgefahr der Fahrzeugantrieb selbsttätig stillgesetzt werden.

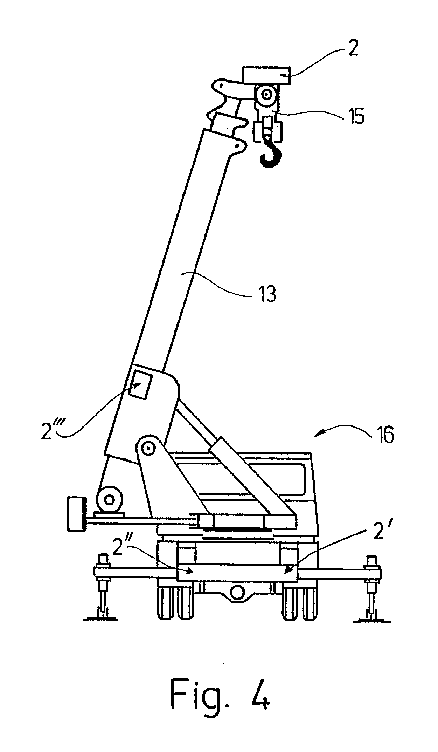

In Fig. 4 ist eine Anordnung von Kameras 2 bis 2″ an einem Fahrzeug 16 gezeigt, das als Kranwagen mit einem Lastarm 13 ausgerüstet ist. Die oberste Kamera 2 blickt nach unten in Richtung des Tragseils 15, so daß eine Beobachtung des Auftreffortes für den Kranhaken möglich ist.

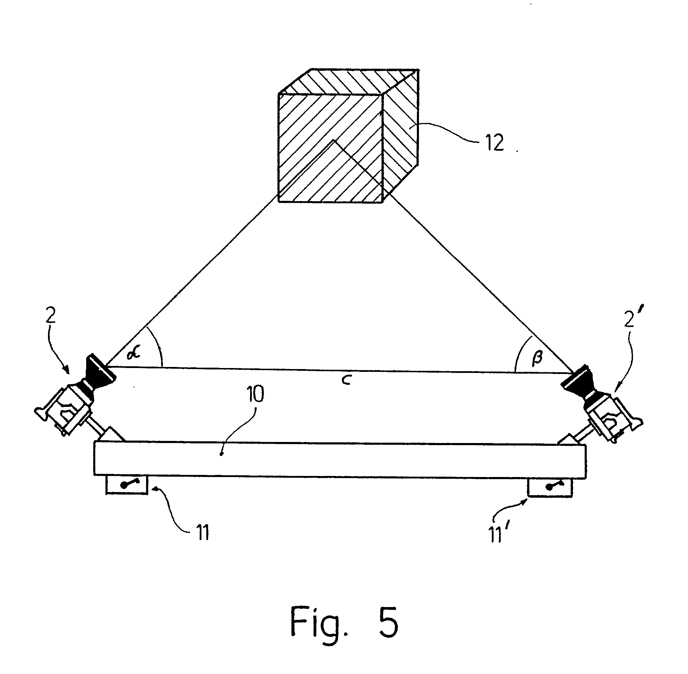

In Fig. 5 ist eine Anordnung, bestehend aus zwei Kameras 2, 2′ gezeigt, die auf einem gemeinsamen Lagerbalken 10 angeordnet sind. Der Lagerbalken 10 ist mit Magnetfüßen 11, 11′ oder dgl. ausgestattet, so daß man die gesamte Anordnung sowohl an ein Fahrzeug 16 als auch z.B. an eine Last ankoppeln kann, wie das weiter unten beschrieben werden wird.

Aus Fig. 5 geht auch hervor, wie die Entfernungsmessung durchgeführt wird, die zwischen den Kameras 2, 2′ und einem im Blickfeld befindlichen Objekt 12 stattfindet. Als bekannte Größen stehen die Entfernung c zwischen den beiden Kameras 2, 2′ und die Winkel $\alpha$ und $\beta$ zur Verfügung, so daß die Entfernung zum Objekt 12 leicht feststellbar ist.

Dadurch, daß die in Fig. 5 gezeigte Anordnung zwei fixierte Kameras umfaßt, die über den Lagerbalken 10 in definierter Entfernung gehalten werden, kann man diese Anordnung im Bedarfsfall verwenden, um scwohl eine Monitor-Überwachung, als auch eine Computer-Entfernungs-oder Geschwindigkeitsmessung durchzuführen.

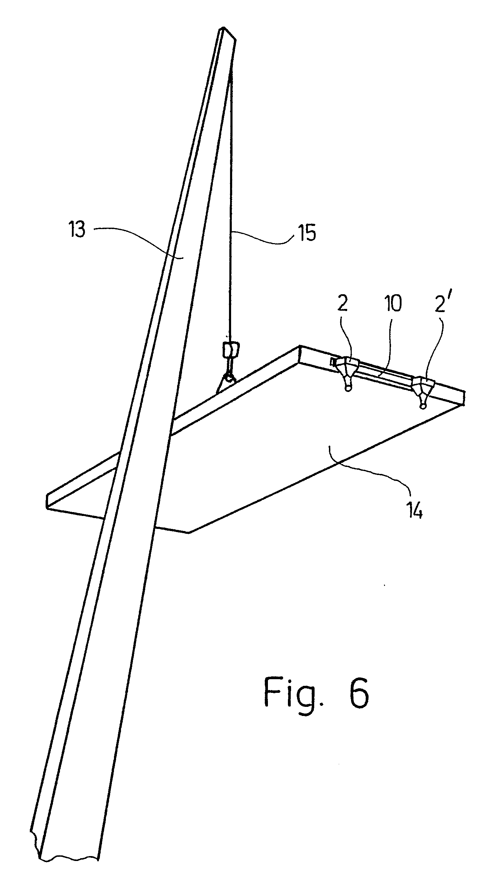

Wie in Fig. 6 gezeigt, kann man dann z.B. die Kameraanordnung nach Fig. 5 an einer Last 14 befestigen, die am Tragseil 15 eines Tragarms 13 hängt. Auf diese Weise ist es der Bedienungsperson des Kranes möglich, die Last 14 relativ schnell abzusenken, da über die Kameraanordnung und den nachgeschalteten Computer ein Warnsignal dann abgegeben wird, wenn eine kritische Entfernung unterschritten wird.

Die in Fig. 5 gezeigte Anordnung kann z.B. auch am Boden eines Hubschraubers befestigt werden, so daß ein Pilot bei der Landung zum einen ein besseres Blickfeld hat (Überwachung durch Monitor in der Hubschrauberkanzel), als auch eine direkte Entfernungsbestimmung vornehmen kann.

## Ansprüche

1. Verfahren zum Steuern von Fahrzeugen, insbesondere Flurförderzeugen und Hebezeugen, und/oder zum Verringern der aktiven und passiven Gefährdung von Bedienungspersonen derartiger Fahrzeuge, deren Gesichtsfeld in wenigstens einem Abschnitt eingeschränkt ist, in dessen Richtung das Fahrzeug bzw. die gefährdende Last bewegt wird, **dadurch gekennzeichnet,** daß durch mindestens eine (Bild-)Erfassungs-Einrichtung (Kamera oder dgl.) am Fahrzeug (16) mindestens der verdeckte Teil des Gesichtsfeldes der Bedienungsperson (21) von der (Bild-)Erfassungs-Einrichtung aufgenommen und im wesentlichen ohne Zeitverzögerung auf einem Informationswiedergabegerät (Monitor 1 oder dgl.) innerhalb des Gesichtsfeldes der Bedienungsperson (21) wiedergegeben wird, und/oder die von der Erfassungs-Einrichtung erfaßten Signale zur Steuerung des Fahrzeugs (16) ausgewertet werden.

2. Verfahren nach Anspruch 1, dadurch gekennzeichnet, daß die Signale von mindestens zwei (Bild-)Erfassungs-Einrichtungen, die in einem definierten Abstand zueinander angeordnet sind, unter einem Winkel von ungleich 180° auf mindestens den verdeckten Teil des Gesichtsfeldes gerichtet sind, miteinander verglichen und gegebenenfalls virtuell zur Deckung gebracht werden, daraus die Winkellage des Objekts zur Anordnung der Erfassungs-Einrichtungen und daraus seine Entfernung zum Fahrzeug (16)bzw. zur gefährdenden Last (14) bestimmt und im Gesichtsfeld der Bedienungsperson (21) angezeigt, bzw. zur Steuerung des Fahrzeugs (16) verwendet werden.

3. Verfahren nach Anspruch 2, dadurch gekennzeichnet, daß der Abstand des Fahrzeugs (16) zu einem vorzugsweise in Fahrtrichtung vorhandenen Objekt aus der Winkelstellung der zwei Erfassungs-Einrichtungen ermittelt wird, wenn gleiche definierte Punkte der Bildaufnahme-Einrichtungen mit einem Punkt einer (Meß-)Ebene des Objekts fokussiert wird.

4. Verfahren nach Anspruch 1 sowie einem oder mehreren der weiteren Ansprüche, dadurch gekennzeichnet, daß bei Ausbildung der Erfassungs-Einrichtung als Kameras (2, 2′, 2″) diese in Abhängigkeit zur Verwendung der aufgenommenen Bilder für die Erfassung unterschiedlicher Bildausschnitte umgeschaltet werden, und zwar vorzugsweise manuell.

5. Verfahren nach Anspruch 1 sowie einem oder mehreren der weiteren Ansprüche, dadurch gekennzeichnet, daß die Erfassungseinrichtungen das Fahrzeug (16)selbsttätig wenigstens beim Aufnehmen der Last steuern.

6. Verfahren nach Anspruch 1 sowie einem oder mehreren der weiteren Ansprüche, dadurch gekennzeichnet, daß durch die Erfassungs-Einrichtungen Durchbrüche oder dgl. in einem Hindernis, insbesondere Durchfahrten, erfaßt und/oder ausgemessen und mit den Abmessungen ces Fahrzeugs (16) verglichen werden zur Prüfung der Durchfahrmöglichkeit.

7. Verfahren nach Anspruch 1 sowie einem oder mehreren der weiteren Ansprüche, dadurch gekennzeichnet, daß auf einer Fahrbahn sich befindende Objekte von den ErfassungsEinrichtungen hinsichtlich ihrer Abmessungen und Relativlage vermessen und mit der Bodenfreiheit sowie der Spurbreite des Fahrzeugs (16) verglichen werden zur Prüfung der ungehinderten Überfahrbarkeit der Objekte bzw. des Objekts.

8. Verfahren nach Anspruch 1 sowie einem oder mehreren der weiteren Ansprüche, dadurch gekennzeichnet, daß das Fahrzeug (16), in Abhängigkeit von einem abgespeicherten Plan über den dem Fahrzeug (16) zugeordneten Aktionsbereich überwacht durch die Erfassungs-Einrichtungen gesteuert wird, vorzugsweise nach einem bestimmten Programm und/oder längs vorbestimmter Fahrtrouten.

9. Verfahren nach Anspruch 8, dadurch gekennzeichnet, daß die durch die Erfassungs-Einrichtungen aufgenommenen festen räumlichen Objekte im Aktionsbereich mit dem Plan, der die Objekte enthält, verglichen werden zur Überprüfung der Momentanposition, vorzugsweise im Vergleich mit der aus der Addition gefahrener Streckenvektoren sich ergebenden rechnerischen Position.

10. Verfahren nach Anspruch 1 sowie einem oder mehreren der weiteren Ansprüche, dadurch gekennzeichnet, daß man mindestens zwei Kameras (2, 2', 2") in Abstand zueinander und zwei Monitore (1) vorsieht, so daß eine dreidimensionale Erkennung durch die Bedienungsperson (21) möglich ist.

11. Vorrichtung zur Verringerung der aktiven und passiven Gefährdung von Bedienungspersonen bei Fahrzeugen, insbesondere Flurförderzeugen und Hebezeugen, deren Gesichtsfeld in wenigstens einem Abschnitt eingeschränkt ist, in dessen Richtung sich das Fahrzeug bzw. die gefährdete Last bewegt, gekennzeichnet durch mindestens eine Erfassungs-Einrichtung (Kamera 2), die am Fahrzeug (16) in Fahrtrichtung oder an der zu bewegenden Last (14) derart montiert ist, daß sie auf den verdeckten Teil des Gesichtsfeldes gerichtet ist, und durch ein Bildwiedergabegerät (Monitor 1), das mit der Erfassungs-Einrichtung (Kamera 2) in Verbindung steht und im Fahrzeug (16) bzw. am Fördergerät in der Nähe der Bedienungsperson (21) bzw. an deren Sitzplatz angebracht ist.

12. Vorrichtung nach Anspruch 11, gekennzeichnet durch zwei Bildaufnahme-Einrichtungen (2), die in einem definierten Abstand zueinander am Fahrzeug (16) bzw. am Fördergerät oder an der geförderten Last angeordnet sind und unter einem Winkel ungleich 180° auf einer gemeinsamen, horizontalen Linie auf mindestens den verdeckten Teil des Gesichtsfeldes gerichtet sind, eine Bildverarbeitungseinrichtung (Computer), die mit den Bildaufnahme-Einrichtungen (2) verbunden ist und einen Speicher aufweist, in dem die aus beiden Bildaufnahme-Einrichtungen (2, 2') empfangenen Bildinformationen gespeichert werden können, wobei weiterhin Vergleichermittel (CPU) vorgesehen sind, um die Bildinformationen miteinander zu vergleichen und aus dem Vergleich die unterschiedliche Lage eines abgebildeten Objekts innerhalb der aufgenommenen Bilder zu bestimmen und weiterhin daraus die Winkel und/oder den Abstand zu be stimmen, unter denen das Objekt relativ zum Fahrzeug bzw. dem Fördergerät oder der geförderten Last erscheint, und um schließlich aus dem Winkelwert und dem Abstand der zwei Bildaufnahme-Einrichtungen (2, 2') den Abstand des Objekts zum Fahrzeug bzw. Fördergerät (16) oder geförderten Last zu errechnen, und durch eine Anzeigeeinrichtung (1), die mit dem Computer zum Empfang dessen Ausgangsinformation verbunden und innerhalb des Gesichtsfeldes der Bedienungsperson (21) angeordnet ist.

13. Vorrichtung nach Anspruch 11 oder 12, dadurch gekennzeichnet, daß weiterhin eine Schwellenschaltung vorgesehen ist, die mit dem Computer verschaltet bzw. in diesem angebracht und derart ausgebildet ist, daß dann, wenn die errechnete Entfernung einen Mindestbetrag unterschreitet, ein Signal abgegeben wird, und daß das Signal auf eine Warneinrichtung (Warnlampe oder Warnhupe) geführt ist, um der Bedienungsperson (21) das Eindringen in einen Gefährdungsbereich anzuzeigen.

14. Vorrichtung nach Anspruch 13, dadurch gekennzeichnet, daß eine zeitgesteuerte Vergleichseinrichtung vorgesehen ist, welche in einem definierten Zeitabstand die Ergebnisse von zwei Entfernungsmessungen miteinander vergleicht und daraus die Relativgeschwindigkeit eines aufgenommen Objekts zum Fahrzeug (16) bzw. Fördergerät oder der geförderten Last bestimmt und zur Anzeige bringt und/oder die Schwellenentfernung derart verändert, daß bei einer hohen gemessenen Geschwindigkeit eine weitere Relativentfernung bereits zum Auslösen eines Warn-bzw. Stoppsignals führt als bei niedrigeren Geschwindigkeiten.

Fig. 1

Fig. 2

Fig. 3

Fig. 4

Fig. 5

13    15

2   10   2′

14

Fig. 6